# EUROPÄISCHE PATENTSCHRIFT

(11) **EP 3 941 323 B1**
(45) Veröffentlichungstag und Bekanntmachung des Hinweises auf die Patenterteilung: **11.10.2023**
(21) Anmeldenummer: 20708142.3
(22) Anmeldetag: 11.03.2020
(51) Int. Cl.: A47L 9/02

(54) **VORRICHTUNG ZUM ABSAUGEN VON BOHRSCHLAMM UND IHRE VERWENDUNG**
DEVICE FOR DRAINING DRILLING MUD FROM A RAIL OF A DRY WALL AND ITS USE
DISPOSITIF D'EXTRACTION DE BOUES DE FORAGE D'UN RAIL DE SOL D'UN MUR DE CONSTRUCTION SEC ET SON UTILISATION

(30) Priorität: 21.03.2019 EP 19164276
(43) Veröffentlichungstag der Anmeldung: 26.01.2022
(73) Patentinhaber: Hilti Aktiengesellschaft, 9494 Schaan (LI)
(72) Erfinder: BARBIER, Lionel, 86916 Kaufering (DE); FRANZ, Stefan, 86163 Augsburg (DE); HOLZMEIER, Georg, 86748 Marktoffingen (DE); MAZUR, Matthias, 20359 Hamburg (DE); FALLY, Paul, 22085 Hamburg (DE); SEVER, Eduard, 6713 Ludesch (AT)
(74) Vertreter: Hilti Aktiengesellschaft Corporate Intellectual Property
(86) Internationale Anmeldenummer: PCT/EP2020/056491
(87) Internationale Veröffentlichungsnummer: WO 2020/187662

(56) Entgegenhaltungen:
- JP-A- H09 192 060
- US-A- 3 186 023
- US-A- 4 018 483

## Beschreibung

Die vorliegende Erfindung betrifft eine Vorrichtung zum Absaugen von Bohrschlamm und die Verwendung der Vorrichtung. Die Absaugvorrichtung weist einen Grundköper auf, der an seiner Unterseite einen Hohlraum aufweist, der mit einem Unterdruck beaufschlagbar ist, so dass der im Hohlraum anfallende Bohrschlamm mit einer Saugvorrichtung aus dem Hohlraum abgesaugt werden kann. Ferner weist der Grundkörper eine Absaugöffnung auf, die in den Hohlraum des Grundkörpers mündet, sowie eine Zentrierhilfe für eine Positionierung eines Kernbohrgeräts, wobei die Zentrierhilfe auf einer Oberseite des Grundkörpers angeordnet vorliegt.

### Hintergrund der Erfindung:

Für das Kernbohren in mineralischen Untergründen wird in der Regel ein Kernbohrsystem verwendet, bei dem Wasser zugeführt wird, um eine Kühlung der Bohrkrone und ein Ausspülen des anfallenden Bohrmehls aus dem Bohrloch zu erreichen. Der daraus resultierende Bohrschlamm, der insbesondere eine Mischung aus dem Bohrmehl und der zugeführten Flüssigkeit darstellt, ist in aller Regel unerwünscht, da seine Verbreitung zu Wasserschäden führen kann. Solche Wasserschäden sollen insbesondere bei Renovierungsarbeiten in bewohnten Objekten vermieden werden. Im Stand der Technik sind eine Reihe von Lösungen bekannt, wie das entstehende Bohrwasser bzw. der Borschlamm aufgesammelt bzw. abgesaugt werden kann. Diese Systeme basieren zumeist auf einer Art Wasser(auf)fangring, der verhindern soll, dass sich das Bohrwasser unkontrolliert ausbreitet. Gleichzeitig soll das Bohrwasser aus dem von dem Auffangring erzeugten Reservoir abgesaugt werden können.

In einigen Fällen ist es erwünscht, eine Kernbohrung an einer Stelle im Bauobjekt durchzuführen, an der eine Trockenbauwand aufgestellt werden soll. Darüber hinaus kann es für andere Anwendungen erwünscht sein, Kernbohrungen in solchen Bereichen einer Baustelle durchzuführen, an denen keine konventionellen Absaugsysteme verwendet werden können, die aus dem Stand der Technik bekannt sind. Solche bekannten Absaugsysteme sind beispielsweise Wasserauffangringe. Beispiele für solche Anwendungsfälle, bei denen konventionelle Absaugsystem nicht oder nicht ohne Weiteres verwendet werden können, sind das Bohren in einer Trockenbauschiene oder das Bohren auf schmalen Kanten, deren geometrische Gegebenheiten und Abmessungen es nicht zulassen, einen Wasserauffangring zu installieren bzw. zu verwenden. Die Verwendung eines Absaugsystems wäre aber auch in diesen Fällen wünschenswert, weil dadurch zum einen bei anschließenden Arbeiten das Verlegen von Leitungen und/oder Rohre in der Trockenbauwand wesentlich vereinfacht oder zum anderen das Montieren von Geländern auf Mauerabsätzen erleichtert werden könnte.

Die Trockenbauwand umfasst vorzugsweise zwei Paneele, zwischen denen die Leitungen und/ oder Rohre verlegt werden sollen. Üblicherweise werden Trockenbauwände mit sogenannten Boden- oder Trockenbauschienen am Boden fixiert. Anschließend wird eine (Kern-)Bohrung direkt durch die Schiene und den Boden durchgeführt. Für die Durchführung von Kernbohrarbeiten unter Verwendung von Kühl- und/oder Spülwasser können die konventionellen Auffangringe, die aus dem Stand der Technik bekannt sind, nicht verwendet werden, da sie in Verbindung mit den starren Bodenschienen nicht ausgelegt und angewendet werden können. Insbesondere können die bekannten Systeme nicht innerhalb der Bodenschiene platziert werden. Häufig wird daher in der Praxis die Kernbohrung ohne Wasserfang vorgenommen und ein Volllaufen der Trockenbauschiene mit Bohrwasser - sowie ein späterer Wasserschaden in der Trockenbauwand - in Kauf genommen.

Im Stand der Technik sind auch Saugdüsen bekannt, die in Verbindung mit einem Sauggerät verwendet werden können, um Staub oder Bohrschlamm aufzusaugen. Eine solche Saugdüse ist beispielsweise aus der US 4,018,483 A bekannt. Allerdings weisen die aus dem Stand der Technik häufig solche Abmessungen auf, die es gerade nicht zulassen, in der Bodenschiene einer Trockenbauwand oder auf einem schmalen Mauerabsatz verwendet zu werden. Ebenfalls werden häufig auf Mauerabsätzen zusätzliche Geländer montiert. Die Mauerabsätze sind meist zu schmal, um einen konventionellen Wasserauffangring effektiv montieren zu können, so dass sich diese in der Praxis häufig als ineffektiv erweisen.

Darüber hinaus weisen die aus dem Stand der Technik bekannten System zusätzliche Nachteile auf, da sie zumeist aufgrund der vielen erforderlichen Einzelteile sehr kostenintensiv sind und häufig eine sehr aufwändige Montage am gewünschten Einsatzort erforderlich machen. Dies erschwert die Handhabung der konventionellen Systeme und reduziert nachteiligerweise die Akzeptanz bei den Nutzem.

Einige Anwender helfen sich, indem sie auf die Verwendung von Kühl- bzw. Spülwasser gänzlich verzichten und Kernbohrungen ohne Wasser, d.h. im Wesentlichen "trocken" durchführen. Allerdings führt eine Trocken-Durchführung von Kernbohrungen zu einem deutlich erhöhten Verschleiß an der Bohrkrone und verkürzt ihre Lebenszeit erheblich.

Die Aufgabe, die der vorliegenden Erfindung zugrunde liegt, besteht darin, die vorstehend beschriebenen Nachteile des Standes der Technik zu überwinden und eine Absaugvorrichtung bereitzustellen, die an Orten an einer Baustelle verwendet werden kann, die für konventionelle Absaugsystem nur schwer zugänglich sind. Insbesondere soll eine Absaugvorrichtung bereitgestellt werden, die beispielsweise in Verbindung mit einer Bodenschiene einer Trockenbauwand oder auch auf Mauerabsätzen verwendet werden kann. Dabei soll die bereitzustellende Absaugvorrichtung eine effiziente Absaugung des Bohrschlamms aus einer Bodenschiene ermöglichen, sowie beispielsweise auch das Absaugen auf schmalen Absätzen ermöglichen. Die bereitzustellende Absaugvorrichtung soll einfach in der Anwendung sein und möglichst kostengünstig hergestellt werden können. Insbesondere soll die Erfindung dem Anwender erlauben, sauber in Trockenbauschienen und auf Mauerabsätzen Kernbohrungen mit Wasser durchzuführen. Zusätzlich wäre es wünschenswert, wenn die bereitzustellende Vorrichtung schnell und unaufwändig am gewünschten Einsatzort zu montieren ist bei gleichzeitig geringen Anwendungskosten für das Bauunternehmen oder den Bauherrn.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist eine Vorrichtung zum Absaugen von Bohrschlamm zur Verwendung an schwer zugänglichen Orten auf einer Baustelle vorgesehen. Bei diesen schwer zugänglichen Orten, an denen insbesondere keine konventionellen Absaugvorrichtungen, wie Wasserfanghalter, verwendet werden können, kann es sich beispielsweise um Bodenschienen von Trockenbauwänden oder Mauerabsätze oder schmale Betonkanten handeln. Die Absaugvorrichtung ist dadurch gekennzeichnet, dass die Vorrichtung einen Grundköper aufweist, wobei der Grundkörper an einer Unterseite einen Hohlraum aufweist, der mit einem Unterdruck beaufschlagbar ist, so dass der im Hohlraum anfallende Bohrschlamm mit einer Saugvorrichtung aus dem Hohlraum absaugbar ist, wobei der Grundkörper ferner eine Absaugöffnung aufweist, die auf der Unterseite des Grundkörpers in den Hohlraum mündet, wobei auf einer Oberseite des Grundkörpers eine Zentrierhilfe für eine Positionierung eines Kernbohrgeräts angeordnet ist. Die Vorrichtung wird im Sinne der Erfindung insbesondere auch als Absaugvorrichtung bezeichnet und kann vorteilhafterweise als Bodendüse zum Aufsaugen von nassen oder feuchten Bohrschlamm verwendet werden.

Es ist im Sinne der Erfindung bevorzugt, dass die Absaugvorrichtung über die Absaugöffnung mit einer Saugvorrichtung verbunden werden kann. Dazu kann der obere Bereich der Absaugöffnung mit einem Saugschlauch einer Saugvorrichtung verbunden werden. Vorzugsweise ist die Absaugöffnung somit mit einer Saugvorrichtung verbindbar. Es ist im Sinne der Erfindung insbesondere bevorzugt, dass es sich bei der Saugvorrichtung um einen sogenannten Nass-Sauger handelt oder um ein *Water Management* System, das häufig in Verbindung mit Kernbohrgeräten verwendet wird. Nass-Sauger sind vorzugsweise dazu eingerichtet, insbesondere nassen oder feuchten Bohrschlamm aufzunehmen und/oder aufzusaugen. Beispielsweise kann auch ein kombinierter Nass- und Trockensauger zum Aufsaugen des vorzugsweise feuchten Bohrschlamms verwendet werden. Vorzugsweise kann der Unterdruck, mit dem der Hohlraum des Grundkörpers beaufschlagt werden kann, mit der Saugvorrichtung erzeugt werden, wobei der Unterdruck mit dem Saugschlauch durch die Absaugöffnung in den Hohlraum der Absaugvorrichtung geleitet werden kann.

Es ist im Sinne der Erfindung bevorzugt, dass der Hohlraum im Anwendungsfall, d.h. bei Verwendung der Absaugvorrichtung, mit der Bodenschiene der Trockenbauwand einen geschlossenen Absaugraum bildet, aus dem der Bohrschlamm abgesaugt werden kann. Der geschlossene Absaugraum ist insbesondere luftdicht ausgebildet, wobei die Abdichtung des geschlossenen Volumens vorzugsweise einem gewissen Unterdruck standhält bzw. einen gewissen Unterdruck toleriert, ohne dass die Abdichtung versagt. Wenn die Absaugvorrichtung in der Bodenschiene der Trockenbauwand oder auf einem Mauerabsatz platziert ist, wird die Unterseite des geschlossenen Absaugraums bzw. des Hohlraums vorzugsweise von der Bodenschiene oder einer Maueroberkante gebildet. Der Hohlraum wird vorzugsweise von einer Aussparung im Grundkörper der Absaugvorrichtung gebildet, die zunächst nach unten, d.h. auf der Unterseite, offen ist. Durch das Einlegen der Absaugvorrichtung wird der Hohlraum geschlossen und vorzugsweise zu dem geschlossenen Absaugraum, der mit einem Unterdruck beaufschlagt und aus dem der Bohrschlamm herausgesaugt werden kann. Der Unterdruck in dem Hohlraum sorgt vorzugsweise in einem ersten Schritt dafür, dass sich die Absaugvorrichtung an dem Boden der Schiene festsaugt, wodurch eine Abdichtung bewirkt und der geschlossene Absaugraum gebildet wird. Insbesondere wird dadurch die Boden- bzw. Grundfläche des Grundkörpers abgedichtet.

Vorzugsweise stellt die Absaugöffnung eine im Wesentlichen zylinderförmige Öffnung oder Bohrung innerhalb des Grundkörpers dar. In einer ganz besonders bevorzugten Ausführungsform der Erfindung kann die Absaugöffnung konisch ausgebildet sein. Dadurch wird vorteilhafterweise eine verbesserte Abdichtung zwischen dem zumeist ebenfalls konisch ausgebildeten Saugschlauchende und der Vorrichtung gewährleistet. Die Absaugöffnung ist insbesondere als durchgehende Bohrung oder Öffnung ausgebildet, die auf der Unterseite des Grundkörpers in den Hohlraum einmündet. Die Absaugöffnung kann an ihrem oberen Ende mit einer Saugvorrichtung verbunden werden. Dies kann vorzugsweise mit einem Saugschlauch der Saugvorrichtung erfolgen. Der Unterdruck, der mit der Saugvorrichtung erzeugt wird, kann mit Hilfe des Saugschlauchs in den Hohlraum des Grundkörpers der Absaugvorrichtung geleitet werden. Vorzugsweise weist die Absaugöffnung glatte Innenwände auf, damit der Bohrschlamm nicht an etwaigen Kanten oder Unebenheiten anhaftet.

Es ist im Sinne der Erfindung bevorzugt, dass die Absaugöffnung in Bezug auf eine im Wesentlichen plane Unterseite der Absaugvorrichtung geneigt ausgebildet ist. Vorzugsweise spannt die Unterseite der Absaugvorrichtung eine Ebene auf, mit der eine virtuelle Achse, die vorzugsweise zentral innerhalb der Absaugöffnung angeordnet ist, einen Neigungswinkel einschließt. Der Neigungswinkel kann vorzugsweise in einem Bereich von 0 bis 90 Grad liegen, bevorzugt bei 10 bis 80 Grad.

Die Neigung der Absaugöffnung ist hilfreich bei der Verwendung der Absaugvorrichtung in Verbindung mit einem Kernbohrgerät und einem Nass-Sauger bzw. einem *Water Management-*System, da die unterschiedlichen Geräte anderenfalls einander im Weg sein oder einander behindern könnten, wodurch die Handhabung der Geräte miteinander erschwert würde. Durch die Neigung der Absaugöffnung verläßt der Saugschlauch der Saugvorrichtung bzw. des *Water Management-System* die Absaugvorrichtung in einem Winkel und weist damit von dem im Wesentlichen senkrecht auf der Unterseite der Absaugvorrichtung stehenden Bohrer des Kernbohrgeräts weg. Vorzugsweise weist die Absaugöffnung durch die Neigung der virtuellen zentralen Achse in Richtung einer Hinter- oder Rückseite der Absaugvorrichtung.

In einem Ausführungsbeispiel der Erfindung ist es bevorzugt, dass die die Absaugvorrichtung einen Grundköper aufweist, wobei der Grundkörper an einer Unterseite einen Hohlraum aufweist, der im Falle, dass die Absaugvorrichtung verwendet wird, mit der Bodenschiene der Trockenbauwand einen geschlossenen Absaugraum bildet, wobei der geschlossene Absaugraum so mit einem Unterdruck beaufschlagbar ist, dass der im Hohlraum anfallende Bohrschlamm aus dem Absaugraum mit einer Saugvorrichtung abgesaugt werden kann, wobei der Grundkörper darüber hinaus eine Absaugöffnung zur Verbindung der Vorrichtung mit einer Saugvorrichtung aufweist, wobei die Absaugöffnung auf der Unterseite des Grundkörpers in dem Hohlraum mündet.

Die Absaugvorrichtung kann vor dem Bohrbeginn vorzugsweise genau passend in die Trockenbauschiene eingelegt werden. Die vorgeschlagene Absaugvorrichtung hat an der Bodenseite einen Hohlraum, welcher zwischen der Trockenbauschiene und der Vorrichtung gebildet wird und der beim Anschließen eines Nass-Saugers oder eines *Water Management-Systems* an der dafür vorgesehenen Öffnung einen Unterdruck bildet. Zusätzlich ist die Oberseite des Grundkörpers der Absaugvorrichtung so gestaltet, dass der Anwender diese Fläche als Niederhaltefläche nutzen kann. Dies verhindert ein unerwünschtes Ablösen vor allem beim Beginn des Bohrvorgangs.

Für die Verwendung auf Mauerabsätzen kann ein Ausführungsbeispiel der Erfindung zusätzliche, geometrisch ausgeformte Laschen aufweisen, welche darauf ausgelegt sind, als Fixierungspunkte für den verwendeten Bohrständer zu fungieren. Dadurch kann eine besonders sichere Positionierung der Absaugvorrichtung garantiert werden, auch wenn die Vorrichtung nicht in einer Trockenbauschiene verwendet wird. Zusätzlich können die Laschen auch dann ein Verrutschen der Absaugvorrichtung wirksam verhindern, wenn der Unterdruck im Absaugraum nicht ausreicht, um die Vorrichtung zu fixieren.

Bei den geometrisch ausgeformten Laschen kann es sich um Aussparungen handeln, die zur Fixierung der Absaugvorrichtung in Richtung des Untergrundes geeignet sind. Die Laschen können ferner als Taschen ausgebildet sein. Die Laschen sind insbesondere dazu eingerichtet, vorhandene Klammern eines bestehenden Fixierungssystems aufzunehmen, so dass eine Befestigung erreicht wird. Die Aussparungen können seitlich begrenzt werden durch einen Steg, wobei der Steg vorzugsweise nicht über die restliche Außenfläche der Vorrichtung herausragt.

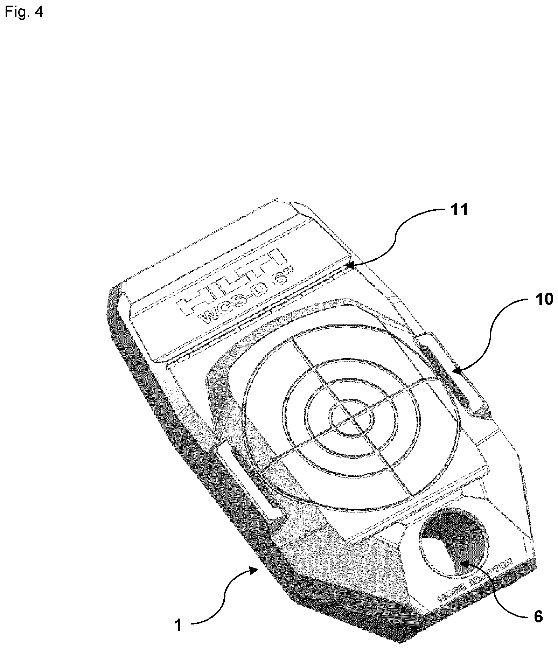

Darüber hinaus kann ein Ausführungsbeispiel der Erfindung eine für den Anwender ersichtliche Markierung zur Kürzung der Vorrichtung aufweisen, damit diese möglichst eng am Bohrständer platziert werden kann. Dadurch kann die Montage des gesamten Systems erheblich erleichtert werden, da vorteilhafterweise ohne Abstandshalter gearbeitet werden kann. Mit anderen Worten kann die Vorrichtung Markierungen aufweisen, mit denen eine Länge der Vorrichtung an geometrische Gegebenheiten oder Abmessungen des Ortes, an dem die Kernbohrungen durchgeführt werden sollen, angepasst werden kann. Die Laschen und Markierungen werden beispielsweise in Fig. 4 dargestellt.

Vorzugsweise ist die Absaugvorrichtung aus einem festen Schaumstoff gefertigt. Mit anderen Worten ist es im Sinne der Erfindung bevorzugt, dass der Grundkörper der Absaugvorrichtung einen bevorzugt harten Schaumstoff umfasst oder aus diesem gebildet ist. Dadurch kann die Absaugvorrichtung besonders kostengünstig in Massenherstellungsverfahren hergestellt werden. Darüber hinaus weist die so erhaltene Absaugvorrichtung aus Schaumstoff ein geringes Gewicht auf und kann leicht auf einer Baustelle mitgeführt werden. Es ist im Sinne der Erfindung bevorzugt, dass der Schaumstoff ein geschäumtes Polypropylen (PP) oder ein Thermoplast ist. Es ist im Sinne der Erfindung bevorzugt, dass sich der Schaumstoff gut und einfach durchbohren lässt, ohne an den Rändern auszufransen oder beim Anbohren zu brechen. Darüber hinaus ist es vorgesehen, einen Schaumstoff zu verwenden, der vorteilhafterweise das im Bohrschlamm enthaltenen Wasser nicht aufsaugt. Mit anderen Worten ist der für die Vorrichtung vorgesehene Schaumstoff nicht saugfähig ausgebildet.

Es ist im Sinne der Erfindung vorgesehen, dass auf einer Oberseite des Grundkörpers eine Zentrierhilfe für eine Positionierung des Kernbohrgeräts angeordnet ist. Die Zentrierhilfe kann ähnlich wie eine Zielscheibe ausgebildet sein, wobei ein Mittelpunkt der Zentrierhilfe insbesondere mittig auf der Oberseite des Grundkörpers angeordnet ist. Der Begriff "mittig" bezieht sich in diesem Zusammenhang insbesondere auf eine Mittelposition zwischen den Seitenflächen der vorgeschlagenen Absaugvorrichtung. Die Zentrierhilfe ist vorzugsweise dazu eingerichtet, den Bohrer eines Kernbohrgeräts so auszurichten, dass er die Bodenschiene der Trockenbauwand und den darunterliegenden Untergrund in Bezug auf die Bodenschiene mittig durchbohrt. Das entstehende Bohrloch weist somit vorzugsweise im Wesentlichen gleiche Abstände zu den Seitenflächen der Absaugvorrichtung auf. Die Zentrierhilfe kann ferner konzentrische Kreise umfassen, die die optimale Bohrposition für unterschiedliche Bohrer-Durchmesser angeben können. Vorzugsweise korrespondieren die konzentrischen Kreise jeweils mit einem bestimmten, standardisierten Bohrer-Durchmesser. Der Bohrer eines Kernbohrgeräts wird vorzugsweise so auf der Oberseite des Grundkörpers positioniert, dass der Bohrer in einem mittleren Bereich der Zentrierhilfe aufgesetzt wird. Die Oberseite des Grundkörpers ist im Bereich der Zentrierhilfe vorzugsweise im Wesentlichen eben ausgebildet. Vorzugsweise wird der Bohrer des Kernbohrgeräts im Wesentlichen senkrecht zu dieser ebenen Oberseite der Absaugvorrichtung auf den Grundkörper aufgesetzt, so dass der Bohrvorgang vorteilhafterweise senkrecht zu der Oberfläche bzw. der Fläche der Bodenschiene erfolgt. Kurz bevor die Trockenbauschiene angebohrt wird, kann die Wasserzufuhr des Kembohrers zugeschaltet werden. Das anfallende Wasser kann vorteilhafterweise durch die Absaugöffnung abgesaugt werden.

Ein zusätzlicher Vorteil der vorgeschlagenen Absaugvorrichtung ist, dass der mit dem Kernbohrgerät erzeugte Durchbruch vorzugsweise den gleichen Durchmesser wie der verwendete Bohrer hat. Dies ist vorteilhaft, weil zwischen dem Kernbohrer und der Absaugvorrichtung dadurch eine Dichtfläche entsteht, an der vorzugsweise kein Bohrwasser austreten kann. Das Bohrwasser, das während des Bohrvorgangs anfällt, wird besonders effektiv durch die Absaugöffnung abgesaugt. Die Absaugvorrichtung ist vorzugsweise so ausgestaltet, dass sie mehrfach für die gleichen oder für aufsteigende Bohrdurchmesser verwendet werden kann. Dadurch ist sie insbesondere wiederverwertbar, so dass mit der Erfindung vorteilhafterweise auch ein Beitrag zum Umweltschutz geleistet wird.

Es ist im Sinne der Erfindung bevorzugt, dass die Absaugvorrichtung Aussparungen aufweist, die vorzugsweise als Handgriffe ausgebildet sind und die es dem Anwender der Absaugvorrichtung erlauben, die den Grundkörper der Absaugvorrichtung besonders einfach vom Boden bzw. aus der Bodenschiene zu lösen. Die Aussparungen sind insbesondere dann vorteilhaft, wenn sich in dem Hohlraum des Grundkörpers ein Unterdruck ausgebildet hat, mit dem sich der Grundkörper an der Bodenschiene festsaugt. Indem der Nutzer - beispielsweise mit einem Finger - in eine der Aussparungen eingreift und den Grundkörper ein wenig anhebt, bricht der Unterdruck im geschlossenen Absaugraum zusammen und die Ansaugwirkung zwischen Absaugvorrichtung und Bodenschiene wird beendet. Dadurch kann die Absaugvorrichtung deutlich einfacher aus der Bodenschiene entfernt werden. Es ist im Sinne der Erfindung bevorzugt, dass der Grundkörper der Absaugvorrichtung mindestens eine Aussparung aufweist. Diese kann vorzugsweise an einer Vorderseite oder einer Rückseite angeordnet sein. Vorzugsweise kann die Absaugvorrichtung auch zwei oder mehr Aussparungen aufweisen, wobei die Aussparungen vorzugsweise an der Vorderseite und/oder der Rückseite des Grundkörpers vorliegen, weil sie dort für den Nutzer besser zugänglich sind.

In einer weiteren Ausführungsform der Erfindung ist es bevorzugt, dass der Grundkörper an seiner Unterseite mindestens eine Aussparung zur erleichterten Entfernung der Vorrichtung aus der Bodenschiene der Trockenbauwand umfasst. Vorzugsweise kann der Grundkörper zwei solcher Aussparungen aufweisen, wobei eine erste Aussparung im vorderen Bereich und eine zweite Aussparung im hinteren Bereich des Grundkörpers vorgesehen sein kann. Die Begriffe "vorne" und "hinten" sind für den Fachmann im Kontext der vorliegenden Erfindung keine unklaren Begriffe, da der hintere Bereich vorzugsweise der Bereich des Grundkörpers ist, der die Absaugöffnung aufweist. Vorzugsweise weist auch die bevorzugt geneigte Absaugöffnung in Richtung des Nutzers. Der vordere Bereich des Grundkörpers weist auf einer Oberseite eine im Wesentlichen ebene Fläche auf, die beispielsweise als Niederhaltefläche verwendet werden kann.

Die Niederhaltefläche stellt vorzugsweise eine Fläche auf der Oberseite der Absaugvorrichtung dar, die dazu verwendet werden kann, die Absaugvorrichtung in der Bodenschiene der Trockenbauwand zu fixieren, indem der Grundkörper in Richtung der Bodenschiene gedrückt wird. Diese Niederhaltefunktion kann beispielsweise auch dadurch erreicht werden, dass ein schwerer Gegenstand auf die im Wesentlichen ebene Fläche gelegt wird, um die Absaugvorrichtung zu beschweren.

Der Grundkörper weist eine im Wesentlichen quaderförmige, dreidimensionale Grundform auf. Die Bodenfläche des Grundkörpers, die vorzugsweise die Unterseite des Quaders bildet, weist vorzugsweise eine im Wesentlichen rechteckige Grundfläche auf. Die Seitenflächen des Grundkörpers schließen sich vorzugsweise an die längeren Rechteckseiten der vorzugsweise rechteckigen Grundfläche der Bodenfläche des Grundkörpers an, während sich die Vorderseite und die Rückseite des Grundkörpers an die kürzeren Rechteckseiten der vorzugsweise rechteckigen Grundfläche der Bodenfläche des Grundkörpers anschließen. Die Seitenflächen liegen vorzugsweise formschlüssig an den Innenwänden der Bodenschiene der Trockenbauwand an, wobei insbesondere eine luftdichte Abdichtung zwischen den Seitenflächen des Grundkörpers und den Innenflächen der Trockenbauschiene bewirkt wird. Mit anderen Worten weist der Grundköper vorzugsweise solche Abmessungen auf, dass eine Abdichtwirkung zwischen den Seitenflächen des Grundkörpers und der Bodenschiene der Trockenbauwand erzeugt wird.

Es ist im Sinne der Erfindung bevorzugt, dass die Trockenbauschienen normiert sind. Vorzugsweise können für unterschiedliche Größen von Trockenbauschienen eigene Absaugvorrichtung bereitgestellt werden. Denkbar sind beispielsweise die Größen 3 5/8" oder 6", ohne darauf beschränkt zu sein. Die genannten Größen entsprechen beispielsweise 9,20 cm bzw. 15,24 cm und stellen vorzugsweise die Breite der Absaugvorrichtung dar. Mit einer solchen bevorzugten Breite in einem Bereich von 5 bis 25 cm, besonders bevorzugt in einem Bereich von 9 bis 16 cm und am meisten bevorzugt bei 9,20 cm oder 15,24 cm hebt sich die vorgeschlagene Absaugdüse vom Stand der Technik ab, der häufig Bodendüsen offenbart, die zu breit sind, um beispielsweise in der Bodenschiene einer Trockenbauwand oder auf einem schmalen Mauerabsatz verwendet zu werden. Es ist im Sinne der Erfindung ganz besonders bevorzugt, dass die Breite der vorgeschlagenen Absaugvorrichtung an die geometrischen Gegebenheiten und Abmessungen des Ortes, an dem die Kernbohrung durchgeführt werden soll, angepasst werden kann. Wenn beispielsweise die Absaugvorrichtung in einer Bodenschiene einer Trockenbauwand verwendet werden soll, kann es im Sinne der Erfindung bevorzugt sein, dass die Breite der Absaugvorrichtung mit der Breite der Bodenschiene korrespondiert. Dies kann im Sinne der Erfindung insbesondere bedeuten, dass die Breite der Vorrichtung und eine innere Breite der Bodenschiene im Wesentlichen gleich oder ähnlich sind. Vorzugsweise ist ein Abstand zwischen den Seitenflächen der Bodenschiene etwas größer als die Breite der Absaugvorrichtung, so dass die Vorrichtung besonders einfach in die Bodenschiene eingelassen oder aus dieser entfernt werden kann.

Die Breite der Absaugvorrichtung stellt vorzugsweise den Abstand der im Wesentlichen parallelen Seitenflächen des Grundkörpers dar. Es ist im Sinne der Erfindung insbesondere bevorzugt, dass die Seitenflächen des Grundkörpers mit Seitenflächen der Bodenschiene der Trockenbauwand so zusammenwirken, dass eine luftdichte Abdichtung entsteht. Vorzugsweise ist die Vorrichtung bzw. ihr Grundkörper so positionierbar, dass sie in die Bodenschiene einer Trockenbauwand vor Bohrbeginn eingelegt werden kann. Die Abmessungen der Vorrichtung bzw. des Grundkörpers, insbesondere ihre Breite, korrespondieren daher vorzugsweise mit der Breite der Bodenschiene der Trockenbauwand. Der Begriff "korrespondieren" bedeutet im Sinne der Erfindung bevorzugt, dass die Abmessungen des Grundkörpers so auf die Abmessungen der Bodenschiene der Trockenbauwand abgestimmt sind, dass der Grundkörper in die Bodenschiene eingelegt werden kann und mit den Seitenflächen der Bodenschiene abdichtet, insbesondere dann, wenn in der Bodenschiene Flüssigkeit oder Bohrschlamm vorhanden ist.

Es ist im Sinne der Erfindung bevorzugt, dass eine Ausgestaltung des Hohlraums im Inneren der vorgeschlagenen Absaugdüse in Bezug auf seine Bodenfläche optimiert ist. Das bedeutet im Sinne der Erfindung bevorzugt, dass die Grundfläche des Hohlraums in Bezug auf das Hohlraumvolumen maximiert wird, so dass es vorteilhafterweise einen großen Anteil der Bodenfläche der vorgeschlagenen Absaugdüse ausmacht. Vorzugsweise kann der Hohlraum eine maximierte Fläche nach unten ausbilden. Eine solche Maximierung der Fläche bewirkt eine optimale "Ansaugkraft". In einer bevorzugten Ausgestaltung der Erfindung kann der Hohlraum eine im Wesentlichen kreisförmige Grundfläche aufweisen. Durch die bevorzugte großzügige Verrundung bzw. Abrundung der Kanten im Hohlraum entstehen vorteilhafterweise keine schwer zu reinigenden Ecken, in denen der Borschlamm hängenbleibt und nur schwer entfernt werden kann. Insbesondere erleichtert die vorzugsweise im Wesentlichen kanten- und eckenfreie Ausgestaltung der Grundfläche des Hohlraums eine spätere Reinigung der Absaugvorrichtung, so dass die Vorrichtung besonders einfach häufig wiederverwendet werden kann.

Es kann in einer anderen Ausführungsform der Erfindung bevorzugt sein, dass der Hohlraum einen großen Anteil der Bodenfläche der Vorrichtung umfasst und dass die Randlinien im Wesentlichen dem Verlauf der Seitenkanten der Vorrichtung folgen. Vorzugsweise kann eine Grundfläche des Hohlraums jede beliebige Form aufweisen, wobei es im Sinne der Erfindung bevorzugt ist, dass der Hohlraum in Bezug auf die Bodenfläche der Vorrichtung ein möglichst großes Volumen aufweist. Dadurch kann eine größere Fläche mit Unterdruck beaufschlagt werden, so dass die luftdichte Abdichtung des Hohlraums bzw. des geschlossenen Absaugvolumens verbessert werden kann. Wenn die Grundfläche des Hohlraums Ecken aufweist, ist es im Sinne der Erfindung bevorzugt, dass die Ecken große, vorzugsweise stumpfe Winkel zwischen 90 und 180 Grad umfassen.

In einem zweiten Aspekt betrifft die Erfindung eine Verwendung der vorgeschlagenen Absaugvorrichtung zum Absaugen von Bohrschlamm aus einer Bodenschiene einer Trockenbauwand. Die für die Absaugvorrichtung eingeführten Begriffe, Definitionen und technischen Vorteile gelten vorzugsweise für die Verwendung der Absaugvorrichtung analog.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: Ansicht einer bevorzugten Ausgestaltung der Erfindung
- Fig. 2: Ansicht einer Unterseite einer bevorzugten Ausgestaltung der Erfindung
- Fig. 3: Ansicht einer bevorzugten Ausgestaltung der Absaugvorrichtung, die in eine Trockenbauschiene eingelegt ist.
- Fig. 4: Ansicht einer bevorzugten Ausgestaltung der Absaugvorrichtung mit Markierungen und Laschen
- Fig. 5: Ansichten von Unterseiten von bevorzugten Ausgestaltungen der Erfindung
- Fig. 6: Ansicht einer bevorzugten Ausgestaltung der Absaugvorrichtung, die zusammen mit einem Bohrständer verwendet wird.
- Fig. 7: weitere Ansicht einer bevorzugten Ausgestaltung der Absaugvorrichtung, die zusammen mit einem Bohrständer verwendet wird.

### Ausführunqsbeispiele:

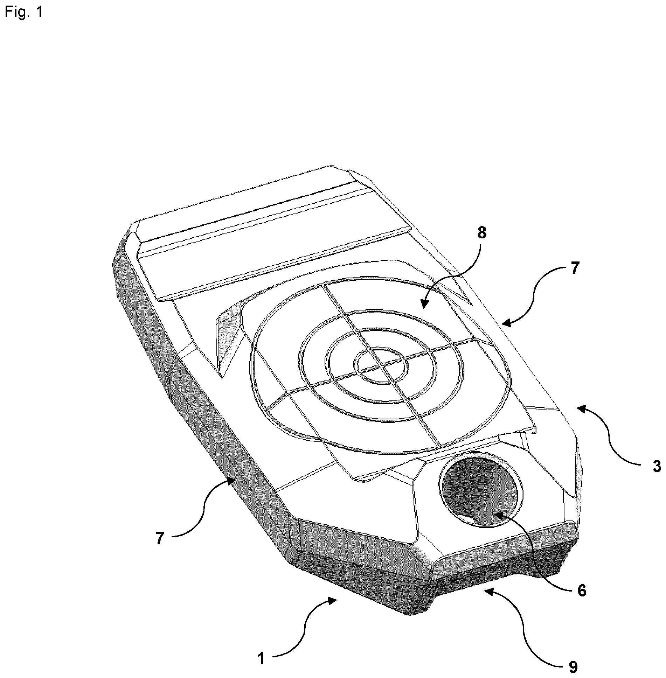

Figur 1 zeigt eine bevorzugte Ausgestaltung einer vorgeschlagenen Absaugvorrichtung (1). Dargestellt ist der Grundkörper (3) der Absaugvorrichtung (1), der vorzugsweise von einem quaderförmigen Stück Schaumstoff gebildet wird. Der Grundkörper (3) weist eine Absaugöffnung (6) auf, die mit einer Saugvorrichtung (nicht dargestellt) verbunden sein kann. In die Absaugöffnung (6) kann beispielsweise ein Saugschlauch der Saugvorrichtung eingeführt werden. Vorzugsweise kann mit dem Saugschlauch ein Unterdruck, der von der Saugvorrichtung erzeugt wird, in einen Hohlraum (5) des Grundkörpers (3) geleitet werden. Der Hohlraum (5) des Grundkörpers (3) liegt vorzugsweise auf einer Unterseite (4) der Absaugvorrichtung (1) vor. An der vorzugsweise schmaleren Vorder- und/oder Rückseite der Absaugvorrichtung (1) können Aussparungen (9) vorgesehen sein, mit denen eine Entfernung der Absaugvorrichtung (1) aus einer Bodenschiene (2) einer Trockenbauwand erleichtert werden kann, indem der Unterdruck im Hohlraum (5) des Grundkörpers (3) zerstört wird. Die längeren Seiten des Grundkörpers (3) bilden vorzugsweise die Seitenflächen (7) der Absaugvorrichtung (1). Diese Seitenflächen (7) können vorteilhafterweise so mit Innenflächen der Trockenbauschiene (2) zusammenwirken, dass der Unterdruck auf der Unterseite (4) der Absaugvorrichtung (1) und in dem Hohlraum (5) derart ist, dass mit dem Unterdruck der Saugvorrichtung Bohrschlamm aus dem Hohlraum (5) abgesaugt werden kann. Vorzugsweise dichten die Seitenflächen (7) des Grundkörpers (3) die Innenwände der Bodenschiene (2) der Trockenbauwand ab.

Auf einer Oberfläche des Grundkörpers (3) ist eine Zentrierhilfe (8) für das Aufsetzen des Kernbohrgeräts vorgesehen. Die Zentrierhilfe (8) ist vorzugsweise dazu eingerichtet, eine optimale, mittige Position des Kernbohrers zwischen den Wänden der Bodenschiene (2) der Trockenbauwand zu finden. Dazu umfasst die Zentrierhilfe (8) vorzugsweise einen Mittelpunkt, der gleiche Abstände zu den Seitenflächen (7) der Absaugvorrichtung (1) aufweist, sowie konzentrische Ringe, die um den Mittelpunkt der Zentrierhilfe (8) herum angeordnet sind. Die in Figur 1 dargestellte Ausführungsform der Erfindung kann beispielsweise eine Breite zwischen 15 und 16 cm aufweisen. Vorzugsweise kann die Breite der Absaugvorrichtung (1) an die Breite der Trockenbauschiene (2) angepasst sein.

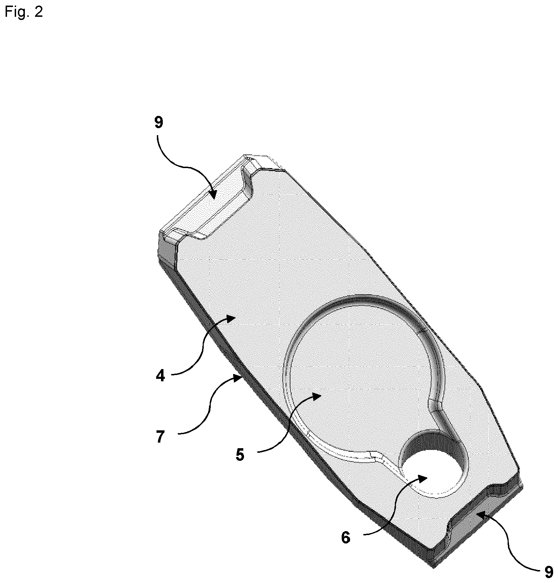

Figur 2 zeigt eine Unterseite (4) einer bevorzugten Ausgestaltung der Absaugvorrichtung (1). Die Unterseite (4) ist vorzugsweise eben ausgebildet. Sie weist eine Aussparung auf, die vorzugsweise eine kreisförmige Grundfläche aufweist. Es ist auch anders geformte Grundflächen für den Hohlraum (5) denkbar. Vorzugsweise ist der Anteil der Fläche, die den Hohlraum (5) bildet, gegenüber der Gesamtgrundfläche der Vorrichtung (1) möglichst groß, wobei vorzugsweise eine Stabilität der von dem Hohlraum (5) innerhalb der Vorrichtung (1) erzeugten Wände nicht negativ beeinflusst wird. Diese Aussparung bildet einen Hohlraum (5), dessen Unterseite von der Bodenschiene (2) einer Trockenbauwand gebildet wird, wenn die Absaugvorrichtung (1) in eine solche Trockenbauschiene (2) eingelegt ist. Durch den Unterdruck der Saugvorrichtung, mit der die Absaugvorrichtung (1) über die Absaugöffnung (6) verbunden sein kann, wird die Absaugvorrichtung (1) an die Bodenschiene (2) angesaugt, so dass ein geschlossenes Absaugvolumen gebildet wird, aus dem heraus Bohrschlamm gesaugt werden kann. Der Hohlraum (5) ist vorzugsweise mit der Absaugöffnung (6) verbunden, so dass der Unterdruck der Saugvorrichtung durch die Absaugöffnung (6) in den Hohlraum (5) des Grundkörpers (3) gelangen kann. Auf der Unterseite (4) des Grundkörpers (3) können offene Aussparungen (9) angeordnet sein, mit denen die Entfernung der Vorrichtung (1) aus der Bodenschiene (2) erleichtert werden kann.

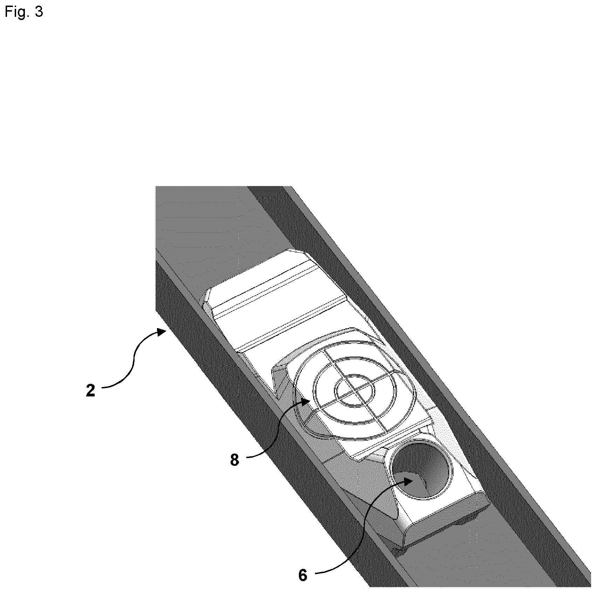

Figur 3 zeigt eine Ansicht einer bevorzugten Ausgestaltung der Absaugvorrichtung (1), die in eine Trockenbauschiene (2) eingelegt ist. Die Seitenflächen (7) der Absaugvorrichtung (1) schließen vorzugsweise formschlüssig mit Innenwänden der Bodenschiene (2) ab, so dass zwischen dem Grundkörper (3) der Absaugvorrichtung (1) und der Bodenschiene (2) eine Abdichtung entsteht. Ferner sind in Figur 3 die Aussparung (9), die Zentrierhilfe (8) und die Absaugöffnung (6) der Absaugvorrichtung (1) zu sehen. Die in Figur 3 dargestellte Ausführungsform der Absaugvorrichtung (1) kann beispielsweise eine Breite zwischen 9 und 10 cm aufweisen.

Fig. 4 zeigt eine bevorzugte Ausführungsform der vorgeschlagenen Absaugvorrichtung (1) mit Markierungen (11) und Laschen (10). Wie in Fig. 4 dargestellt, können die Laschen (10) an den Seitenflächen (7) der Vorrichtung (1) angeordnet vorliegen, insbesondere in einem oberen Bereich, d.h. auf einer Oberseite der Absaugvorrichtung (1). Die Laschen (10) können dazu verwendet werden, die Absaugdüse (1) mit einem Bohrständer zu verbinden, an dem ein Kernbohrgerät befestigt werden kann. Es ist im Sinne der Erfindung bevorzugt, dass die vorgeschlagene Absaugvorrichtung (1) zwei Laschen (10) aufweist, die vorzugsweise symmetrisch an den Seitenkanten der Absaugvorrichtung (1) angeordnet sein können. Vorzugsweise sind die Laschen (10) auf Höhe der Zentrierhilfe (8) angeordnet. Dadurch kann vorteilhafterweise die Zentrierung des Kernbohrgeräts und das Bohren an einem «richtigen» Punkt auf dem Untergrund erleichtert werden.

Neben den Laschen (10) kann die Absaugvorrichtung (1) Markierungen (11) aufweisen. Die Markierungen (11) können dazu verwendet werden, die Vorrichtung (1) zu kürzen, wenn dies aufgrund von vorgefundenen oder gegebenen räumlichen Voraussetzungen erforderlich sein sollte. Beispielsweise kann der Bereich jenseits der Markierung (11) von dem Rest der Vorrichtung (1) abgetrennt werden, beispielsweise indem er abgeknickt oder abgesägt wird. Dadurch kann der Raum, der bei Verwendung der vorgeschlagenen Absaugsüde vorhanden sein muss, weiter reduziert werden, wodurch sich der Anwendungsbereich der Erfindung vorteilhafterweise vergrößert. Die Markierungen (11) können optische Markierungen sein, die vom Nutzer der Erfindung optisch wahrgenommen werden können. Es kann sich jedoch auch um Erhebungen oder Vertiefungen handeln, die der haptischen Wahrnehmung zugänglich sind. Besonders Vertiefungen haben sich als besonders geeignete Markierungen herausgestellt, weil in diesem Fall ein Abknicken des jenseitigen Bereichs der Vorrichtung (1) weiter erleichtert werden kann. Die in Figur 4 dargestellte Ausführungsform der Absaugvorrichtung (1) kann beispielsweise eine Breite zwischen 15 und 16 cm aufweisen.

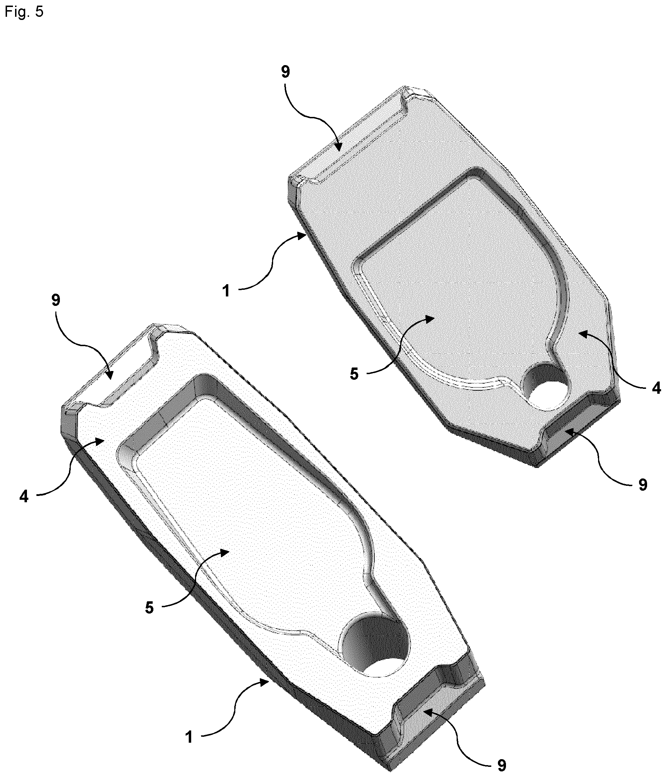

Fig. 5 zeigt Ansichten von Unterseiten (4) von bevorzugten Ausgestaltungen der Erfindung (1). Insbesondere zeigt Fig. 5 mögliche Ausgestaltungen der Hohlräume (5), die sich auf den Unterseiten (4) der Grundkörper (3) der Absaugvorrichtungen (1) befinden. Es ist im Sinne der Erfindung bevorzugt, dass das Volumen des Hohlraums (5) im Inneren der vorgeschlagenen Absaugdüse (1) in Bezug auf die Bodenfläche der Vorrichtung (1) optimiert werden kann. Das bedeutet im Sinne der Erfindung bevorzugt, dass die Grundfläche des Hohlraums (5) in Bezug auf das Hohlraumvolumen möglichst groß gestaltet wird, so dass die offene Grundfläche des Hohlraums (5) vorteilhafterweise einen großen Anteil der Bodenfläche oder Unterseite (4) der vorgeschlagenen Absaugdüse (1) ausmacht. Mit anderen Worten kann der Hohlraum (5) eine maximierte Fläche nach unten ausbilden. Durch die besonders große offene Grundfläche des Hohlraums (5) kann vorteilhafterweise eine optimale "Ansaugkraft" erreicht werden, so dass Bohrschlamm mit der Erfindung besonders effektiv aufgesaugt werden kann. Beispielsweise ist die offene Grundfläche des Hohlraums (5) bei dem Ausführungsbeispiel unten links im Bild in Bezug auf die gesamte Bodenfläche (4) des Grundkörpers (3) bzw. der Vorrichtung (1) größer als bei dem Ausführungsbeispiel oben rechts im Bild. Mit anderen Worten ist das Verhältnis von offener Grundfläche des Hohlraums (5) zu der gesamten Bodenfläche (4) der Vorrichtung (1) dem Ausführungsbeispiel unten links in Fig. 5 größer als in dem Ausführungsbeispiel oben rechts in Fig. 5.

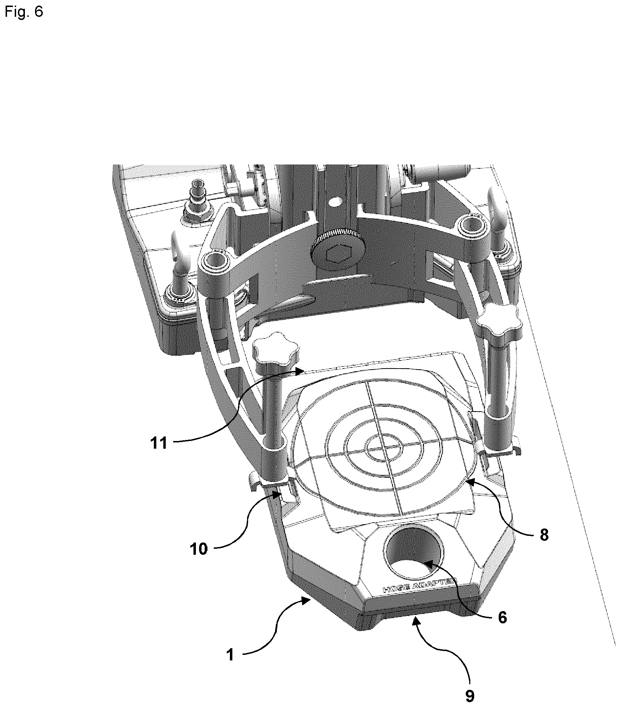

Fig. 6 zeigt eine Ansicht einer bevorzugten Ausgestaltung einer Absaugvorrichtung (1), die zusammen mit einem Bohrständer verwendet wird. Der Bohrständer ist dazu eingerichtet, ein Kernbohrgerät zu halten, und kann mit Hilfe der Laschen (10) mit der Absaugvorrichtung (1) verbunden werden. Die in Fig. 6 dargestellte Absaugvorrichtung (1) ist im Gegensatz zu der in Fig. 4 dargestellten Vorrichtung (1) verkürzt. Das heißt, sie endet an der Markierung (11), die zum Kürzen der Absaugvorrichtung (1) verwendet werden kann. Der über die Markierung (11) hinausgehende Bereich der Absaugvorrichtung (1) wurde bei der in Fig. 6 dargestellten Vorrichtung (1) entfernt, so dass die verkürzte Absaugvorrichtung (1) besonders einfach und unkompliziert mit dem Bohrständer zusammenwirken kann.

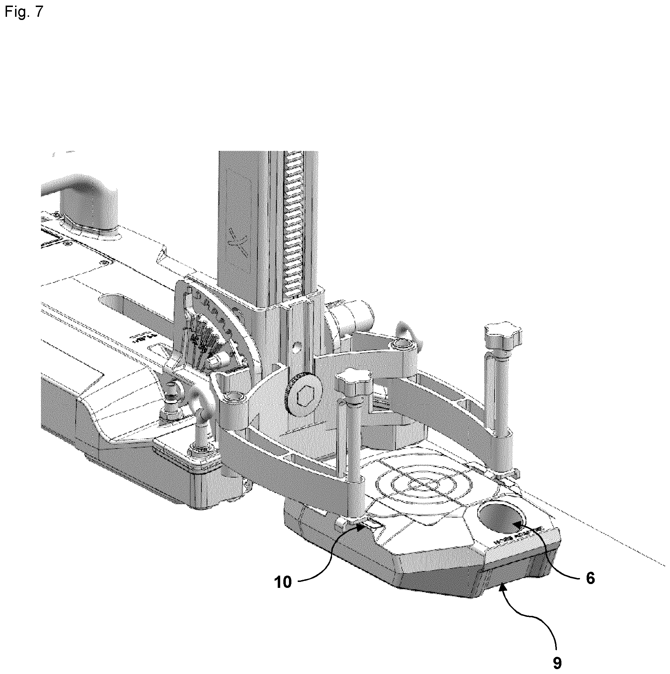

Fig. 7 zeigt weitere Ansicht einer bevorzugten Ausgestaltung der Absaugvorrichtung (1), die zusammen mit einem Bohrständer verwendet wird. Auch bei dem in Fig. 7 dargestellten Ausführungsbeispiel der Erfindung ist die Ansaugvorrichtung (1) mit Hilfe der Laschen (10) mit einem Bohrständer verbunden.

### Bezugszeichenliste

- 1: Vorrichtung bzw. Absaugvorrichtung
- 2: Bodenschiene
- 3: Grundkörper
- 4: Unterseite des Grundkörpers
- 5: Hohlraum
- 6: Absaugöffnung
- 7: Seitenflächen des Grundkörpers
- 8: Zentrierhilfe
- 9: Aussparung
- 10: Laschen
- 11: Markierung zum Kürzen der Absaugvorrichtung

## Patentansprüche

1. Vorrichtung (1) zum Absaugen von Bohrschlamm zur Verwendung an schwer zugänglichen Orten auf einer Baustelle, wobei die Vorrichtung (1) einen Grundköper (3) aufweist, wobei der Grundkörper (3) an einer Unterseite (4) einen Hohlraum (5) aufweist, der mit einem Unterdruck beaufschlagbar ist, so dass der im Hohlraum (5) anfallende Bohrschlamm mit einer Saugvorrichtung aus dem Hohlraum (5) absaugbar ist, wobei der Grundkörper (3) ferner eine Absaugöffnung (6) aufweist, die in den Hohlraum (5) des Grundkörpers (3) mündet, **dadurch gekennzeichnet, dass** auf einer Oberseite des Grundkörpers (3) eine Zentrierhilfe (8) für eine Positionierung eines Kernbohrgeräts angeordnet ist.

2. Vorrichtung (1) nach Anspruch 1
**dadurch gekennzeichnet, dass**
der Grundkörper (3) einen Schaumstoff umfasst.

3. Vorrichtung (1) nach Anspruch 1 oder 2
**dadurch gekennzeichnet, dass**
ein Volumen des Hohlraums (5) in Bezug auf seine Grundfläche maximiert ist.

4. Vorrichtung (1) nach einem der vorhergehenden Ansprüche
**dadurch gekennzeichnet, dass**
der der Hohlraum (5) eine im Wesentlichen kreisförmige Grundfläche aufweist.

5. Vorrichtung (1) nach einem der vorhergehenden Ansprüche
**dadurch gekennzeichnet, dass**
die Absaugöffnung (6) in Bezug auf eine im Wesentlichen plane Unterseite (4) des Grundkörpers (3) geneigt ausgebildet ist.

6. Vorrichtung (1) nach einem der vorhergehenden Ansprüche
**dadurch gekennzeichnet, dass**
die Vorrichtung (1) geometrisch ausgeformte Laschen als Fixierungsmittel aufweist.

7. Vorrichtung (1) nach einem der vorhergehenden Ansprüche
**dadurch gekennzeichnet, dass**
eine Breite in einem Bereich von 5 bis 25 cm, besonders bevorzugt in einem Bereich von 9 bis 16 cm und am meisten bevorzugt von 9,20 cm oder von 15,24 cm aufweist.

8. Vorrichtung (1) nach einem der vorhergehenden Ansprüche
**dadurch gekennzeichnet, dass**
die Vorrichtung (1) Markierungen zum Kürzen der Vorrichtung (1) aufweist.

9. Vorrichtung (1) nach einem der vorhergehenden Ansprüche
**dadurch gekennzeichnet, dass**
der Grundköper (1) Seitenflächen (7) aufweist, wobei der Grundköper (3) solche Abmessungen aufweist, dass eine Abdichtwirkung zwischen den Seitenflächen (7) des Grundkörpers und einer Bodenschiene (2) einer Trockenbauwand erzeugt wird.

10. Vorrichtung (1) nach Anspruch 9
**dadurch gekennzeichnet, dass**
der Grundkörper (3) an seiner Unterseite (4) mindestens eine Aussparung (9) zur erleichterten Entfernung der Vorrichtung (1) aus der Bodenschiene der Trockenbauwand umfasst.

11. Verwendung einer Vorrichtung (1) nach einer der vorhergehenden Ansprüche zum Absaugen von Bohrschlamm aus einer Bodenschiene (2) einer Trockenbauwand.

12. Verwendung einer Vorrichtung (1) nach einer der Ansprüche 1 bis 10 zum Absaugen von Bohrschlamm bei Anwendung der Vorrichtung (1) auf einem schmalen Mauerabsatz.

## Claims

1. Device (1) for extracting drilling sludge for use at difficult to access locations on a building site, wherein
the device (1) has a main body (3), wherein the main body (3) has, on a lower side (4), a cavity (5), which can be subjected to a vacuum, thus enabling the drilling sludge formed in the cavity (5) to be extracted from the cavity (5) by means of a suction device, wherein the main body (3) furthermore has an extraction opening (6), which opens into the cavity (5) of the main body (3),
**characterized in that**
a centering aid (8) for positioning a core drill is arranged on an upper side of the main body (3).

2. Device (1) according to Claim 1,
**characterized in that**
the main body (3) comprises a foam.

3. Device (1) according to Claim 1 or 2,
**characterized in that**
a volume of the cavity (5) is maximized in relation to its base area.

4. Device (1) according to any one of the preceding claims,
**characterized in that**
the cavity (5) has a substantially circular base area.

5. Device (1) according to any one of the preceding claims,
**characterized in that**
the extraction opening (6) is of sloping design in relation to a substantially flat lower side (4) of the main body (3).

6. Device (1) according to any one of the preceding claims,
**characterized in that**
the device (1) has geometrically shaped lugs as a fixing means.

7. Device (1) according to any one of the preceding claims,
**characterized in that**
it has a width in a range of from 5 to 25 cm, particularly preferably in a range of from 9 to 16 cm, and most preferably of 9.20 cm or of 15.24 cm.

8. Device (1) according to any one of the preceding claims,
**characterized in that**
the device (1) has markings for shortening the device (1).

9. Device (1) according to any one of the preceding claims,
**characterized in that**
the main body (1) has side faces (7), wherein the main body (3) has dimensions such that a sealing effect is produced between the side faces (7) of the main body and a floor rail (2) of a drywall.

10. Device (1) according to Claim 9,
**characterized in that**
the main body (3) has at least one recess (9) on the lower side (4) thereof for easier removal of the device (1) from the floor rail of the drywall.

11. Use of a device (1) according to any one of the preceding claims for extracting drilling sludge from a floor rail (2) of a drywall.

12. Use of a device (1) according to any one of Claims 1 to 10 for extracting drilling sludge when using the device (1) on a narrow wall offset.

## Revendications

1. Dispositif (1) d'aspiration de boue de forage pour utilisation dans des endroits difficiles d'accès sur un chantier,
le dispositif (1) présentant un corps de base (3), le corps de base (3) présentant sur un côté inférieur (4) un espace creux (5) qui peut être soumis à une dépression, de telle sorte que la boue de forage produite dans l'espace creux (5) peut être aspirée hors de l'espace creux (5) avec un dispositif d'aspiration, le corps de base (3) présentant en outre une ouverture d'aspiration (6) qui débouche dans l'espace creux (5) du corps de base (3),
**caractérisé en ce que**
sur un côté supérieur du corps de base (3) est agencée une aide au centrage (8) pour un positionnement d'un appareil de carottage.

2. Dispositif (1) selon la revendication 1,
**caractérisé en ce que**
le corps de base (3) comprend une mousse.

3. Dispositif (1) selon la revendication 1 ou 2,
**caractérisé en ce**
**qu'**un volume de l'espace creux (5) est maximisé par rapport à sa surface de base.

4. Dispositif (1) selon l'une quelconque des revendications précédentes,
**caractérisé en ce que**
l'espace creux (5) présente une surface de base essentiellement circulaire.

5. Dispositif (1) selon l'une quelconque des revendications précédentes,
**caractérisé en ce que**
l'ouverture d'aspiration (6) est configurée sous forme inclinée par rapport à un côté inférieur (4) essentiellement plan du corps de base (3).

6. Dispositif (1) selon l'une quelconque des revendications précédentes,
**caractérisé en ce que**
le dispositif (1) présente des pattes formées géométriquement en tant que moyens de fixation.

7. Dispositif (1) selon l'une quelconque des revendications précédentes,
**caractérisé en ce**
**qu'**il présente une largeur dans une plage de 5 à 25 cm, de manière particulièrement préférée dans une plage de 9 à 16 cm et de manière préférée entre toutes de 9,20 cm ou de 15,24 cm.

8. Dispositif (1) selon l'une quelconque des revendications précédentes,
**caractérisé en ce que**
le dispositif (1) présente des marques pour le raccourcissement du dispositif (1).

9. Dispositif (1) selon l'une quelconque des revendications précédentes,
**caractérisé en ce que**
le corps de base (1) présente des faces latérales (7), le corps de base (3) présentant des dimensions telles qu'un effet d'étanchéité est créé entre les faces latérales (7) du corps de base et un rail de sol (2) d'une cloison sèche.

10. Dispositif (1) selon la revendication 9,
**caractérisé en ce que**
le corps de base (3) comprend sur son côté inférieur (4) au moins un évidement (9) pour faciliter le retrait du dispositif (1) du rail de sol de la cloison sèche.

11. Utilisation d'un dispositif (1) selon l'une quelconque des revendications précédentes pour l'aspiration de boue de forage d'un rail de sol (2) d'une cloison sèche.

12. Utilisation d'un dispositif (1) selon l'une quelconque des revendications 1 à 10 pour l'aspiration de boue de forage lors de l'application du dispositif (1) sur un recoupement étroit.
